# EUROPEAN PATENT APPLICATION

(11) **EP 1 099 537 A1**
(43) Date of publication of application: **16.05.2001**
(21) Application number: 99308998.6
(22) Date of filing: 11.11.1999
(51) Int. Cl.: B29C 70/24

(54) **Reinforcement of a laminated member for an aircraft**

(71) Applicant: BRITISH AEROSPACE PUBLIC LIMITED COMPANY, Farnborough, Hants. GU14 6YU (GB)
(72) Inventor: The designation of the inventor has not yet been filed
(74) Representative: Edis, Ronald Malcolm

(57) **Abstract**

A method of securing a reinforcement member 14 to a laminated member for an aircraft such as a laminated skin 10, the method comprising the steps of positioning the reinforcement member 14 on or beneath a surface 16 of the laminated member 10 and providing means which penetrates the reinforcement member 14 and laminated member 18 to inhibit separation of one from the other.

## Description

The invention relates to reinforcement of a laminated member for an aircraft and relates primarily to a method of securing a reinforcement member to a laminated skin for an aircraft.

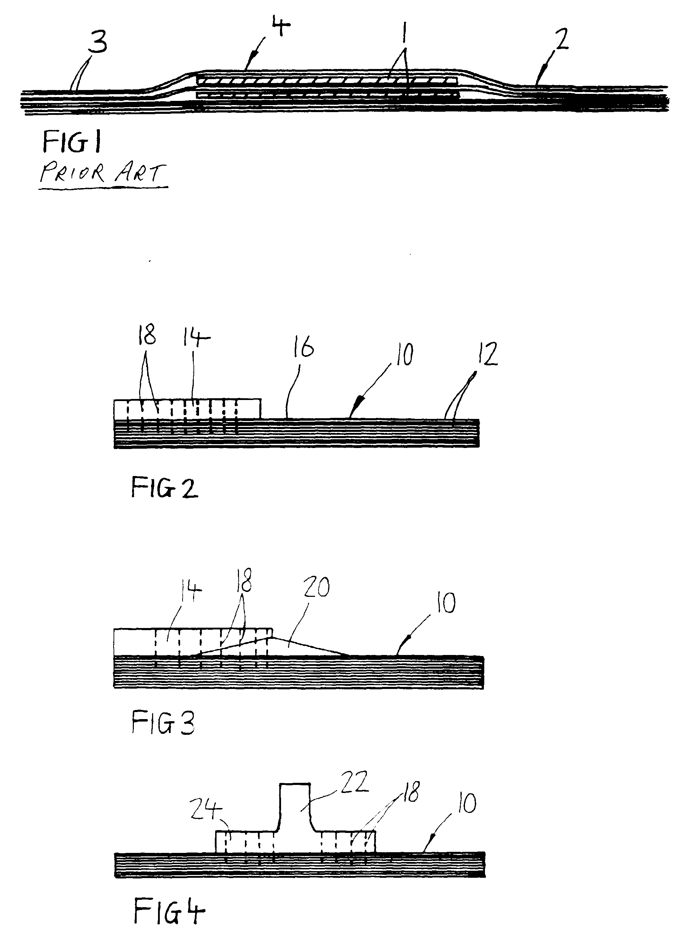

An increase in local thickness of aircraft skin is often desirable, particularly to provide reinforcement around an access hole. Referring to Fig 1 of the accompanying drawings, it is known to add reinforcement plies 1 to a laminated skin section 2 in order to increase the local thickness. The plies 1, which are formed from carbon fibre composite, glass fibre or aramid fibres, are generally buried in a stack, the stack being bound by successive layers 3 forming the skin section 2 to define a reinforced area 4.

Where multiple reinforcement plies 1 are inserted between successive layers 3, the layers are effectively displaced from the centroid of the skin section 2 which is not desirable. Moreover, the separation of successive layers 3 by the reinforcement plies 1 increases the possibility of peel-induced delamination of the skin section 2.

An aim of the invention is to provide an improved method of reinforcing a laminated member for an aircraft.

According to a first aspect of the invention there is provided a method of securing a reinforcement member to a laminated member for an aircraft comprising the steps of, positioning the reinforcement member on or beneath a surface of the laminated member and providing means which penetrates the reinforcement member and laminated member to inhibit separation of one from the other.

By using the means which penetrates the reinforcement member and laminated member, the reinforcement member can become effectively integrated with the laminated member.

The method may include providing the laminated member in the form of a laminated skin for the aircraft.

The method may further include leaving the means which penetrates the reinforcement member permanently in position.

The method may include causing the means which penetrates the reinforcement member to pass completely through the reinforcement member.

Preferably, the method includes providing the means which penetrates the reinforcement member in the form of pins or stitches.

The step of providing pins or stitches may comprise inserting the pins or stitches into the reinforcement member and the laminated member at an angle substantially perpendicular to the plane of the laminated member.

Preferably, the pins penetrate those laminations of the laminated member which, in use, will be subjected to peel loads.

Preferably, the step of positioning a reinforcement member on the laminated member takes place after the laminating stage of making the laminated member. That is advantageous over the prior method where the plies needed to increase the local thickness need to be put in place during the laminating process.

In one embodiment, the method includes providing a reinforcement member in the form of a structural member arranged to withstand loading or a preformed laminate.

The method may include introducing a material such as an adhesive or compliant layer between an edge region of the reinforcement member and the laminated member. When the material is introduced between the reinforcement member and the laminated member the means which penetrates the reinforcement member may also penetrate the said material.

According to a second aspect of the invention there is provided a reinforcement member secured to a laminated member for an aircraft using the method according to the first aspect of the invention or any of the consistory clauses relating thereto.

A method of reinforcing a laminated skin for an aircraft will now be described by way of example and with reference to Figs 2 and 3 of the remaining accompanying drawings in which,
Fig 2 is a cross section of part of a laminated skin for an aircraft reinforced by a method in accordance with the invention,
Fig 3 is a cross section of part of a laminated skin for an aircraft reinforced using a further method in accordance with the invention, and
Fig 4 shows one example of the case of a structural member to reinforce a laminated skin for an aircraft.

Referring to Fig 2, a parent material such as an aircraft wing skin 10 is of laminated form. The wing skin 10 comprises a lay-up of fibres 12, each layer of fibres 12 being laid in one of several different directions, for example at 0 degrees, 45 degrees and - 45 degrees. A preformed reinforcement member 14 is positioned on an inner surface 16 of the wing skin 10. Pins 18 are inserted through the reinforcement member 14 into the wing skin 10 . The pins 18 enter at an angle substantially perpendicular to the wing skin 10 and penetrate some of the layers of fibres 12. The pins 18 may enter at different and various angles so that the reinforcement members 14 arc particularly difficult to detach from the wing skin 10. The pins 18 penetrate the wing skin 10 to a layer of fibres 12 at a depth where the layer of fibres 12 is not exposed to peel loads.

Also, as the reinforcement member 14 can be preformed to the desired thickness it is not necessary to reinforce the skin, for example by introducing multiple plies 1 between successive layers 3 as shown in Fig 1, thereby simplifying the design of the wing skin 10.

Looking at Fig 3, in a further embodiment of the invention a compliant layer 20 such as an adhesive may be introduced between the wing skin 10 and a peripheral margin of the reinforcement member 14. The compliant layer 20 helps to reduce local stress at the edge of the reinforcement member 14. The compliant layer 20 is of triangular cross section but may be of another suitable cross section. When it is desirable that part of the compliant layer 20 be arranged under the reinforcement member 14 as shown in Fig 3, the compliant layer is positioned on the wing skin 10 prior to positioning of the reinforcement member 14. The pins 18 then pass through the reinforcement member 14 and the compliant layer 20 into the wing skin 10.

In other cases the compliant layer 20 may be arranged directly against the peripheral edge of the reinforcement member 14 after positioning of the reinforcement member on the wing skin 10.

Referring to Fig 4, a main structural member 22 of T-shaped cross section intended to bear load has its flange 24 joined to the wing skin 10 and is held in place by means of pins 18.

In a further embodiment of the invention (not shown) the preformed reinforcement member 14 may be positioned beneath the inner surface 16 of the wing skin 10 just prior to the end of the laminating stage and one or more closure layers 12 may be added in the laminating stage to hold the reinforcement member 14 firmly in place. Alternatively, the reinforcement member 14 could be buried in the wing skin 10 at any depth by temporarily halting the laminating stage. As a single reinforcement member 14 is inserted in such a case rather than a multiplicity of plies, the risk of delamination is reduced when compared to the Fig 1 construction.

It will be appreciated that whilst pins 18 have been described as the means which penetrates the reinforcement member and the laminated skin of the aircraft, stitches could also be used.

Whilst specific reference has been made to a laminated skin of an aircraft, the invention could be applied to laminated ribs and/or spars of the aircraft.

## Claims

1. A method of securing a reinforcement member to a laminated member for an aircraft, the method comprising the steps of, positioning the reinforcement member on or beneath a surface of the laminated member and providing means which penetrates the reinforcement member and laminated member to inhibit separation of one from the other.

2. A method according to claim 1, including providing the laminated member in the form of a laminated skin for the aircraft.

3. A method according to claim 1 or 2, including leaving the means which penetrates the reinforcement member permanently in position.

4. A method according to any preceding claim including causing the means which penetrates the reinforcement member to pass completely through the reinforcement member.

5. A method according to any preceding claim, including providing the means which penetrates the reinforcement member in the form of pins or stitches.

6. A method according to claim 4 or 5, in which the method comprises inserting the pins or stitches into the reinforcement member and the laminated member at an angle substantially perpendicular to the plane of the laminated member.

7. A method according to claim 5 or 6, in which the method includes causing the pins or stitches to penetrate those laminations of the laminated member which, in use, will be subjected to peel loads.

8. A method according to any preceding claim, in which the step of positioning a reinforcement member on the laminated member takes place after the laminating process.

9. A method according to any preceding claim, including providing a reinforcement member in the form of a structural member arranged to withstand loading or a preformed laminate.

10. A method according to any preceding claim, in which the method includes introducing a material such as an adhesive or compliant layer at or between an edge region of the reinforcement member and the laminated member.

11. A method according to claim 10, in which the means which penetrates the reinforcement member also penetrates the said material.

12. A method of securing a reinforcement member to a laminated member for an aircraft substantially as described herein with reference to Figs 2 to 4 of the accompanying drawings.

13. A reinforcement member secured to a laminated member for an aircraft using the method according to any preceding claim.

14. An aircraft having a reinforced laminated member according to claim 13.
